# EUROPÄISCHE PATENTANMELDUNG

(11) **EP 2 037 366 A1**
(43) Veröffentlichungstag der Anmeldung: **18.03.2009**
(21) Anmeldenummer: 07018119.3
(22) Anmeldetag: 14.09.2007
(51) Int. Cl.: G06F 11/36

(54) **System und Verfahren zur Fehlersuche in einem Programm**

(71) Anmelder: SIEMENS AKTIENGESELLSCHAFT, 80333 München (DE)
(72) Erfinder: Opaterny, Thilo, 90453 Nürnberg (DE)

(57) **Zusammenfassung**

Die Erfindung betrifft ein System (1) zur Fehlersuche in einem Programm (2), insbesondere einer Automatisierungslösung, wobei das Programm eine Menge von Bausteinen (31 ...38) umfasst, wobei einzelne Bausteine bei der Ausführung des Programms jeweils durch Bausteine der Menge aufrufbar sind, wobei für einen Aufruf eines Bausteins mindestens eine Aufrufreihenfolge (30) der im Programm vorhandenen Bausteine, die durch aufeinander folgende Aufrufe zu dem Aufruf des Bausteins geführt haben, existiert, mit einem Speicher (4) zum Speichern der Aufrufreihenfolgen während der Ausführung des Programms und mit Mitteln (5) zum Erkennen nicht bekannter Aufrufreihenfolgen (302) während der Ausführung des Programms.

## Beschreibung

Die Erfindung betrifft ein System und ein Verfahren zur Fehlersuche in einem Programm, insbesondere einer Automatisierungslösung.

Heutzutage werden Programme in der Regel von mehreren Entwicklern gemeinsam entwickelt. Hierbei sind die einzelnen Entwickler für unterschiedliche Programm-Komponenten verantwortlich. Teilweise werden die Programm-Komponenten auch an unterschiedlichen Standorten entwickelt. Hierbei kann es zudem noch zu einer extremen räumlichen Verteilung kommen, indem Entwicklungsmannschaften auf unterschiedliche Kontinente verteilt sind und es zur räumlichen Verteilung auch einen Zeitunterschied gibt. Die einzelnen Programm-Komponenten werden im Laufe des Entwicklungsprozesses zwar über ein Konfigurations-Management zu einem gemeinsamen Programm bzw. im Rahmen eines Automatisierungssystems zu einer so genannten Automatisierungslösung zusammengesetzt, hierbei können jedoch in der Regel nicht alle Fehler innerhalb der Programm-Komponenten erkannt werden. Insbesondere bei Automatisierungssystemen, welche über Automatisierungslösungen vor Steuerung einer Anlage oder eines technischen oder Produktionsprozesses verfügen, wird das erstellte Programm bzw. die Automatisierungslösung erst oft beim Inbetriebsetzer der Anlage vollständig überprüft und der Inbetriebsetzer wird dann mit unerwartetem Programmverhalten konfrontiert. Der Inbetriebsetzer der Automatisierungslösung hat bei seiner Tätigkeit in der Regel nur die gesamte Anlage bzw. den gesamten Prozess im Auge. Über die einzelnen Automatisierungskomponenten bzw. Programm-Komponenten weiß der Inbetriebsetzer in der Regel nur relativ wenig. Insofern ist es für ihn besonders schwierig, innerhalb der einzelnen erstellten Programm-Komponenten Fehler oder unerwartetes Verhalten des Programms zu entdecken.

Im Stand der Technik wird für die Suche nach Fehlern in der Regel ein Debugger verwendet. Der Debugger ist hierbei Bestandteil einer Entwicklungsumgebung. Er hilft den einzelnen Entwicklern bei der Fehlersuche. Dabei hat der Debugger üblicherweise Funktionalitäten wie Haltepunkte (Breakpoints), Einzelschrittausführung, Aufrufstapel (Call Stack), Beobachtungstabellen (Watches) und Aufzeichnungspuffer (Traces). Zur Überprüfung auf Fehler setzt der Entwickler nun einen Haltepunkt auf eine Anweisung. Bevor das Programm diese Anweisung ausführt, bleibt es stehen. Durch zusätzliche Bedingungen kann der Entwickler das Anhalten einschränken. Beispielsweise kann er bestimmen, ob das Programm nur anhält, wenn eine Variable einen bestimmen Wert aufweist. Hat die Variable diesen Wert nicht, dann bleibt das Programm nicht stehen. Mit Hilfe des Debuggers und der Haltepunkte mit den Anweisungen kann der Entwickler sein Programm nun Anweisung für Anweisung ausführen lassen.

Hierbei bestehen Programme aus einzelnen Funktionen, die sich gegenseitig aufrufen. Diese Funktionen werden im Automatisierungsumfeld auch Bausteine genannt. Die Bausteine bzw. Funktionen werden nun innerhalb eines Programms durch jeweils andere Funktionen des Programms nacheinander aufgerufen. Das heißt, dass es zu jeder Anweisung innerhalb eines Programms in dem Augenblick, in dem die Anweisung ausgeführt wird, auch eine entsprechende Hierarchie bzw. eine Kette von Funktionen bzw. Bausteinen gibt, die dazu geführt haben, dass diese Anweisung nun ausgeführt wird. Es existiert somit quasi eine Historie der einer Anweisung vorgelagerten Bausteine bzw. Funktionen. Diese Historie kann beispielsweise mit Hilfe eines Aufrufstapels (Call Stack) gespeichert werden. Der Aufrufstapel enthält dann eine Liste von Anweisungen, wobei an dem Ende dieser Liste die aktuell ausgeführte Anweisung steht.

Wenn die Programmausführung nun unterbrochen ist, kann der Entwickler sich den Inhalt seiner Programmvariablen ansehen. In vielen Entwicklungsumgebungen gibt es die Möglichkeit, Tabellen mit Variablen zu definieren, die beim Anhalten der Programmausführung angezeigt werden sollen, so genannte Beobachtungstabellen.

Die Technik der Verwendung von Haltepunkten (Breakpoints) lässt sich bei der Fehlersuche in normalen Programmen nun durchaus gut anwenden. Im Automatisierungsumfeld ist es jedoch von Nachteil, wenn man für die Fehlersuche Haltepunkte verwendet. Mit Hilfe der Automatisierungslösung bzw. des Programms soll ein Prozess gesteuert werden, was zur Voraussetzung hat, dass der Programmablauf bzw. der Ablauf der Automatisierungslösung nicht gestört wird. Eine Störung bzw. Unterbrechung würde den Prozess und damit viel Material und Ressourcen kosten.

Zur Verhinderung von Unterbrechungen wird deswegen im Rahmen von Automatisierungslösungen ein so genannter Aufzeichnungspuffer (Trace) verwendet. Eine Aufzeichnung ist hierbei ein Auftrag, beim Durchlaufen bestimmter Anweisungen Daten aufzuzeichnen, z.B. die bereits genannten Variablen aus Beobachtungstabellen. Man kann sich beispielsweise auch Funktionsaufrufe bzw. Aufrufe einzelner Bausteine anzeigen lassen und die entsprechenden oben bereits erwähnten Aufrufstapel.

Bei einer derartigen Vorgehensweise ist jedoch das Problem die Größe der Datenmenge, die im System gegeben ist. Ein Entwickler wäre mit derartig vielen Funktionsaufrufen, die im Rahmen der Aufrufstapel erzeugt werden, konfrontiert, dass er Schwierigkeiten hätte, die Fehler in der Menge der aufgezeichneten Stapel zu detektieren.

Die Aufgabe der vorliegenden Erfindung besteht darin, ein System und ein Verfahren anzugeben, welches ein Erkennen nicht bekannter Aufrufreihenfolgen von Funktionen bzw. Bausteinen ermöglicht.

Die Aufgabe wird gelöst durch ein System zur Fehlersuche in einem Programm, insbesondere einer Automatisierungslösung, wobei das Programm eine Menge von Bausteinen umfasst, wobei einzelne Bausteine bei der Ausführung des Programms jeweils durch Bausteine der Menge aufrufbar sind, wobei für einen Aufruf eines Bausteins mindestens eine Aufrufreihenfolge der im Programm vorhandenen Bausteine die durch aufeinanderfolgende Aufrufe zu dem Aufruf des Bausteins geführt haben, existiert, mit einem Speicher zum Speichern der Aufrufreihenfolge während der Ausführung des Programms und mit Mitteln zum Erkennen nicht bekannter Aufrufreihenfolgen während der Ausführung des Programms.

Die Aufgabe wird weiterhin gelöst durch ein Verfahren zur Fehlersuche in einem Programm, bei dem das Programm eine Menge von Bausteinen umfasst, wobei einzelne Bausteine bei der Ausführung des Programms jeweils durch Bausteine der Menge aufgerufen werden, bei dem für einen Aufruf eines Bausteins mindestens eine Aufrufreihenfolge der im Programm vorhandenen Bausteine, die durch aufeinanderfolgende Aufrufe zum Aufruf des Bausteins geführt haben, existiert, bei dem die Aufrufreihenfolgen während der Ausführung des Programms gespeichert werden und bei dem nicht bekannte Aufrufreihenfolgen während der Ausführung des Programms erkannt werden.

Der Erfindung liegt die Erkenntnis zugrunde, dass es für einen Entwickler zu jedem Zeitpunkt während der Ausführung des Programms, also zur Laufzeit, ohne Unterbrechung möglich sein sollte, die Funktionen bzw. Bausteine, die durch nacheinander folgende Aufrufe zum Aufruf des aktuellen Bausteins geführt haben, in ihrer zeitlichen, aufeinander folgenden Reihenfolge, zu erkennen. Nur wenn dies möglich ist, kann der Entwickler bei der Fehlersuche den Weg der sich gegenseitig aufrufenden Funktionen bzw. Bausteine nachvollziehen und so den gerade aufgetretenen Fehler erkennen. Hierbei ist jedoch zu jedem Zeitpunkt eine Unmenge von derartigen aufeinander folgenden Funktionen, die zu dem Aufruf eines Bausteins geführt haben, vorhanden. Die zu analysierende Menge wäre für den Entwickler somit zu hoch. Bei den aufeinander folgenden Funktionen bzw. Bausteinen, die zum Aufruf des aktuellen Bausteins bzw. der aktuellen Funktionen geführt haben, sind nun eine große Menge von Aufrufreihenfolgen dabei, die grundsätzlich bekannt sind. Das heißt, die Kette nacheinander aufgerufener Funktionen ist bereits im System hinterlegt und kommt immer wieder vor. Neben diesen bekannten Aufrufreihenfolgen gibt es nun aber auch unbekannte, so genannte indirekte Aufrufe eines Bausteins bzw. einer Funktion. In diesem Fall sind die Funktionsaufrufe, die schließlich zum Aufruf des entsprechenden Bausteins geführt haben, nicht bekannt und nicht im System hinterlegt. Genau diese Aufrufreihenfolgen, die nicht einem definierten Muster entsprechen, werden mit Hilfe des erfindungsgemäßen Systems erkannt. Dem Entwickler kann somit eine stark reduzierte Menge an Aufrufreihenfolgen bzw. Information zur Verfügung gestellt werden, und das Überprüfen bei der Fehlersuche wird dem Entwickler somit deutlich erleichtert.

Eine weitere vorteilhafte Ausbildung der Erfindung besteht darin, dass die Bausteine eine Aufrufspezifikation aufweisen, wobei die Aufrufspezifikation die dem Baustein zugehörigen bekannten Aufrufreihenfolgen beschreibt. Hierdurch ist auf einfache Weise eine Möglichkeit gegeben, im System die bekannten Aufrufpfade bzw. Aufrufreihenfolgen, die durch aufeinander folgendes Aufrufen der Funktionen bzw. Bausteine erzeugt werden, zu hinterlegen. Dadurch wird eine einfache Möglichkeit gegeben, die bekannten Aufrufreihenfolgen anhand ihrer Spezifikation mit nicht bekannten Aufrufreihenfolgen zu vergleichen.

Eine Aufrufspezifikation nach bekanntem Stand der Technik besteht aus einer Liste von Funktionen und gegebenenfalls deren Rücksprungadressen. Die Rücksprungadresse definiert genau einen Aufruf einer Funktion in einer anderen Funktion. Mit dieser Liste kann eindeutig genau eine Aufrufreihenfolge identifiziert werden.

Hier soll aber nicht eine bekannte Reihenfolge identifiziert werden sondern eine unerwartete. Eine bekannte Variante der Aufrufspezifikation lässt die Rücksprungadresse weg, damit werden unter Umständen bereits mehrere Aufrufreihenfolgen identifiziert. Dies reicht aber noch nicht aus. Durch Definition von Platzhaltern und möglichen Negationen in der Liste von Funktionen und Rücksprungadressen können viele unterschiedliche Aufrufreihenfolgen spezifiziert werden.

Durch eine Negation kann man Ausdrücken, dass an dieser Stelle der Liste eine andere Funktion und/oder Rücksprungadresse stehen muss. Durch die Angabe eines ersten Platzhalters kann ausgedrückt werden, dass an dieser Stelle der Liste eine beliebige Rücksprungadresse in eine Funktion oder in beliebige Rücksprungadresse in einer beliebigen Funktion stehen darf. Durch die Angabe eines zweiten Platzhalters kann ausgedrückt werden, dass mehrere Rücksprungadressen oder Funktionen in der Aufrufreihenfolge beliebig sein dürfen. Ein dritter Platzhalter sieht vor, dass an dieser Stelle der Liste eine Funktion gegebenenfalls mit Rücksprungadressen aus einer angegebenen Menge von Funktionen gegebenenfalls mit Rücksprungadressen stehen darf. Negationen und Platzhalter können beliebig kombiniert werden. Eine weitere Variante ermöglicht die komplette Negation der Liste.

Eine weitere vorteilhafte Ausbildung der Erfindung besteht darin, dass die nicht bekannten Aufrufreihenfolgen durch Vergleich mit den bekannten Aufrufreihenfolgen während der Laufzeit ermittelbar sind. Diese Ausbildung der Erfindung gewährleistet, dass nicht, wie beispielsweise bei der Verwendung von Breakpoints, die Applikation bzw. das Programm angehalten werden muss, um die Wege, die zum Aufruf eines Bausteins geführt haben, zurückverfolgen zu können. Das Programm kann vielmehr weiterlaufen und während das Programm läuft, können die bekannten Aufrufreihenfolgen anhand der Spezifikation mit unbekannten Aufrufreihenfolgen verglichen werden.

Eine weitere vorteilhafte Ausbildung der Erfindung ist dadurch gekennzeichnet, dass das System über einen zweiten Speicher verfügt, der zur Speicherung der nicht bekannten Aufrufreihenfolgen während der Ausführung des Programms vorgesehen ist. Nachdem die Aufrufreihenfolgen miteinander verglichen wurden und die unbekannten Aufrufreihenfolgen ermittelt wurden, werden durch die vorteilhafte Ausbildung der Erfindung die unbekannten Aufrufreihenfolgen in einen Speicher, beispielsweise einen Zwischenspeicher, übertragen. Somit kann das Programm durchlaufen und die während der Laufzeit erkannten nicht bekannten Aufrufreihenfolgen gehen nicht verloren, sondern sind für den Entwickler bzw. den Systemintegrator aus dem Speicher abrufbar.

Zur Anzeige der Aufrufreihenfolgen, insbesondere der nicht bekannten Aufrufreihenfolgen, verfügt das System dann weiterhin über Anzeigemittel, die die gespeicherten Aufrufreihenfolgen auflisten. Hierbei kann es sich neben den nicht bekannten Aufrufreihenfolgen auch um bekannte Aufrufreihenfolgen handeln, wenn der Systemintegrator oder der Entwickler dies wünscht.

Insgesamt kann der Inbetriebsetzer durch die vorliegende Erfindung unerwartete Aufrufreihenfolgen bzw. Aufrufreihenstapel erkennen, ohne Haltepunkte bzw. Breakpoints einsetzen zu müssen. Dies ist möglich, selbst wenn der unerwartete Aufrufstapel bzw. die unerwartete Aufrufreihenfolge nur sehr sporadisch auftritt. Hierdurch wird die Menge der aufzuzeichnenden und analysierenden Daten extrem reduziert. Dadurch wird sowohl die Belastung des Automatisierungssystems verringert als auch die Arbeit des Entwicklers bei der Fehlersuche erleichtert.

Im Folgenden wird die Erfindung anhand der Figuren näher beschrieben und erläutert.

### Es zeigen:

- Fig 1: eine schematische Darstellung des erfindungsgemäßen System.
- Fig 2: eine Aufrufreihenfolge mit nacheinander aufgerufenen Bausteinen bzw. Funktionen.

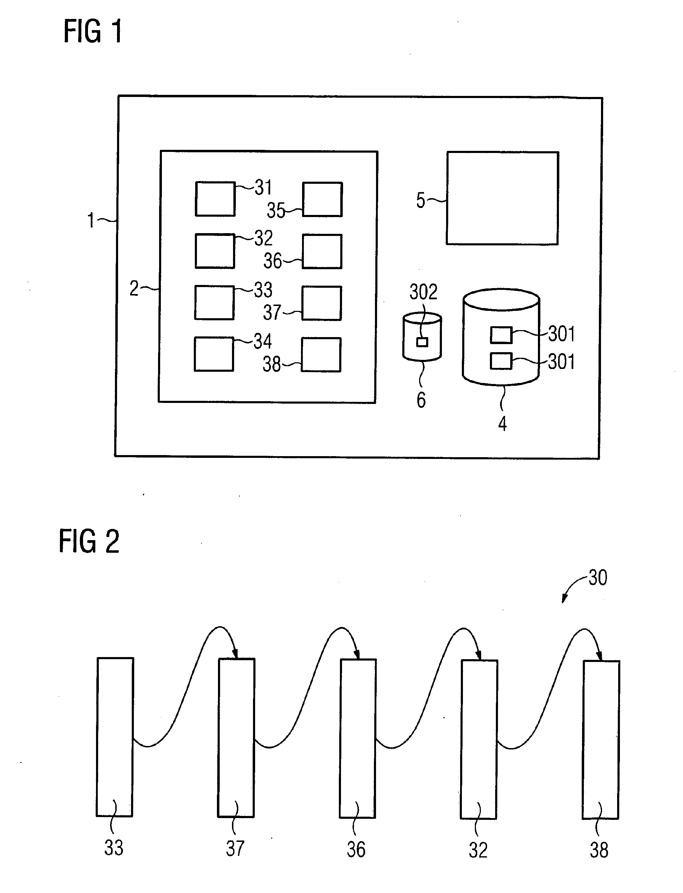

Fig 1 zeigt ein System 1 zur Fehlersuche in einem Programm 2.
Hierbei besteht das Programm aus einer Menge von Bausteinen bzw. Funktionen 31...38. Die einzelnen Bausteine bzw. Funktionen des Programms führen nach Aufruf spezielle Aufgaben aus. Die Bausteine werden hierbei jeweils von einem anderen Baustein innerhalb des Programms aufgerufen. Hierdurch entsteht eine Kette von aufeinander folgenden Aufrufen der einzelnen Bausteine. Dies ist beispielhaft in Fig 2 dargestellt. Die Kette aufeinander folgender Aufrufe von Bausteinen wird auch als Aufrufreihenfolge bzw. Aufrufpfad 30 bezeichnet. Das System verfügt weiterhin über einen Speicher zur Speicherung von bekannten Aufrufreihenfolgen 30. In den Speicher werden die Aufrufreihenfolgenden anhand einer Aufrufspezifikation hinterlegt. Bei einer Aufrufspezifikation handelt es sich um die Beschreibung aller einem Baustein zugehörigen bekannten Aufrufreihenfolge 301. Das System 1 verfügt weiterhin über einen zweiten Speicher 6 zur Speicherung nicht bekannter Aufrufreihenfolgen 302. Zudem verfügt das System über Mittel 5 zum Erkennen von nicht bekannten Aufrufreihenfolgen 302.

Während des Ablaufs eines Programms werden nun alle Aufrufreihenfolgen, die zum Aufruf eines Bausteins geführt haben, ermittelt. Sämtliche Aufrufreihenfolgen können während des Ablaufs eines Programms zwischengespeichert werden. Hierbei werden die ermittelten Aufrufreihenfolgen dann vom System mit den hinterlegten Aufrufreihenfolgen bekannter Aufrufreihen verglichen. Erscheint eine Aufrufreihenfolge, die nicht bekannt ist 302, so wird sie durch die Mittel 5 im System 1 erkannt und in den Speicher 6 geladen. Diese nicht bekannten Aufrufreihenfolgen können innerhalb des Systems dann mit Hilfe einer Anzeige für den Entwickler dargestellt werden. Auf diese Weise muss der Entwickler nur die nicht bekannten Aufrufreihenfolgen bei der Fehlersuche im Programm bzw. in der Automatisierungslösung überprüfen. Das Anzeigen der nicht bekannten Aufrufreihenfolgen kann vom Entwickler hierbei ausgewählt werden, indem er beispielsweise im Engineeringsystem mittels einer Checkbox angibt, dass er nur die nicht bekannten Aufrufreihenfolgen angezeigt haben möchte. Das System ist naturgegeben gleichermaßen in der Lage, dem Entwickler auch sämtliche bekannten Aufrufreihenfolgen zu zeigen. Auf diese Weise wird dem Entwickler ermöglicht, jeden Weg im Ablauf des Programms nachzuvollziehen, der zum Aufruf eines Bausteins geführt hat. Hierbei ist durch die Selektion auf nicht bekannte bzw. indirekte Aufrufreihenfolgen eine Reduktion der zu analysierenden Datenmenge möglich.

## Patentansprüche

1. System (1) zur Fehlersuche in einem Programm (2), insbesondere einer Automatisierungslösung,
• wobei das Programm eine Menge von Bausteinen (31...38) umfasst, wobei einzelne Bausteine bei der Ausführung des Programms jeweils durch Bausteine der Menge aufrufbar sind,
• wobei für einen Aufruf eines Bausteins mindestens eine Aufrufreihenfolge (30) der im Programm vorhandenen Bausteine, die durch aufeinander folgende Aufrufe zu dem Aufruf des Bausteins geführt haben, existiert,
• mit einem Speicher (4) zum Speichern der Aufrufreihenfolgen während der Ausführung des Programms und
• mit Mitteln (5) zum Erkennen nicht bekannter Aufrufreihenfolgen (302) während der Ausführung des Programms.

2. System nach Anspruch 1, bei dem die Bausteine eine Aufrufspezifikation aufweisen, wobei die Aufrufspezifikation die dem Baustein zugehörigen bekannten Aufrufreihenfolgen (301) beschreibt.

3. System nach einem der Ansprüche 1 oder 2, bei dem die nicht bekannten Aufrufreihenfolgen durch Vergleich mit den bekannten Aufrufreihenfolgen während der Laufzeit ermittelbar sind.

4. System nach einem der vorhergehenden Ansprüche, wobei das System einen zweiten Speicher (6) zur Speicherung der nicht bekannten Aufrufreihenfolgen während der Ausführung des Programms aufweist.

5. System nach Anspruch 4, mit Anzeigemitteln zur Anzeige der gespeicherten, nicht bekannten Aufrufreihenfolgen.

6. Verfahren zur Fehlersuche in einem Programm,
• bei dem das Programm eine Menge von Bausteinen umfasst,
• wobei einzelne Bausteine bei der Ausführung des Programms jeweils durch Bausteine der Menge aufgerufen werden,
• bei dem für einen Aufruf eines Bausteins mindestens eine Aufrufreihenfolge der im Programm vorhandenen Bausteine, die durch aufeinander folgende Aufrufe zu dem Aufruf des Bausteins geführt haben, existiert,
• bei dem die Aufrufreihenfolgen während der Ausführung des Programms gespeichert werden und
• bei dem nicht bekannte Aufrufreihenfolgen während der Ausführung des Programms erkannt werden.

7. Verfahren nach Anspruch 6, bei dem die Bausteine eine Aufrufspezifikation aufweisen, wobei die Aufrufspezifikation die dem Baustein zugehörigen bekannten Aufrufreihenfolgen beschreibt.

8. Verfahren nach einem der Ansprüche 6 oder 7, bei dem die nicht bekannten Aufrufreihenfolgen durch Vergleich mit den bekannten Aufrufreihenfolgen während der Laufzeit ermittelt werden.

9. Verfahren nach einem der Ansprüche 6 bis 8, bei dem die nicht bekannten Aufrufreihenfolgen während der Ausführung des Programms gespeichert werden.

10. Verfahren nach Anspruch 9, bei dem die gespeicherten, nicht bekannten Aufrufreihenfolgen angezeigt werden.
